# EUROPEAN PATENT APPLICATION

(11) **EP 4 044 068 A1**
(43) Date of publication of application: **17.08.2022**
(21) Application number: 21191709.1
(22) Date of filing: 17.08.2021
(51) Int. Cl.: G06N 3/04, G06N 3/08

(54) **METHODS AND SYSTEMS FOR MULTIPLE TIME-SERIES DATA FORECASTING**

(30) Priority: 11.02.2021 IN 202121005905
(71) Applicant: Tata Consultancy Services Limited, Maharashtra (IN)
(72) Inventor: ACHAR, Avinash, 600113 Chennai, Tamil Nadu (IN); LOBO, ANTONY JOSHINI, 600097 Chennai, Tamil Nadu (IN); PACHAL, Soumen, 600113 Chennai, Tamil Nadu (IN); RAVINDRAN, BALARAMAN, 600036 Chennai, Tamil Nadu (IN)
(74) Representative: Goddar, Heinz J.

(57) **Abstract**

This disclosure relates generally to methods and systems for multiple time-series data forecasting using recurrent neural networks (RNNs). Conventional techniques in the art for the time-series prediction are limited to deal with one long data sequence and a single forecasting model may not be sufficient and efficient to cover the multiple short data sequences. The present disclosure makes use of greedy recursive procedure to build a set of multi-step forecasting models that covers the multiple data sequences, using the recurrent neural network (RNN) models. The one or more multi-step residual error forecasting models makes the forecasting resulting from the set of multi-step forecasting models, accurate and efficient. The set of multi-step forecasting models are useful for various forecasting applications such as prediction of the sales for retail industries, prediction of power consumption for households, the prediction of traffic occupancy across roads, and so on.

## Description

### CROSS-REFERENCE TO RELATED APPLICATIONS AND PRIORITY

The present application claims priority from Indian provisional application no. 202121005905, filed on February 11, 2021.

### TECHNICAL FIELD

The disclosure herein generally relates to the field of time-series data forecasting, and, more particularly, to methods and systems for multiple time-series data forecasting using recurrent neural networks (RNNs).

### BACKGROUND

Accurate prediction of time-series data poses continuous challenges over several decades. Time-series prediction is useful for various forecasting applications such as prediction of sales for retail industries, prediction of power consumption for households, the prediction of traffic occupancy across roads, and so on. For example, in the retail industries, multi-step time-series prediction may be used to forecast the weekly sales of a company for a specified number of weeks ahead, for example, next 4 weeks, based on the historical sales data, for example, last 3 weeks data. Conventional techniques in the art make use of recurrent neural networks (RNNs) for developing a forecasting model for the time-series prediction, based on the historical data.

However, the conventional techniques in the art for the time-series prediction are limited to deal with one long data sequence, for example, historical data of sales per day of the retail industry for last 1000 days, for developing the forecasting model. But, in many forecasting applications, the historical data may come in the form of multiple data sequences. For example, in the retail industry, the company may be dealing with the sales of thousands of products with varying price rate each day for each product. Hence there may be the historical data having thousands of data sequences each referring to sales and price rate per day of each product. Further, some data sequences of some products may be short sequences (short historical data) and some data sequences of some products may be with minimum varying rate (for example, very minimal changes in the price rate per day of each product, results in minimal impact with the sales of such product, and so on). Hence a single forecasting model may not be sufficient and efficient to cover the multiple data sequences.

### SUMMARY

Embodiments of the present disclosure present technological improvements as solutions to one or more of the above-mentioned technical problems recognized by the inventors in conventional systems.

In an aspect, there is provided a processor-implemented method for multiple time-series multi-step data forecasting, the method comprising the steps of: receiving one or more data sequences and a prediction horizon, wherein each data sequence of the one or more data sequences comprises one or more data instances, each data instance of the one or more data instances comprises an endogenous value and one or more exogenous values; forming one or more unscaled subsequence pairs for each data sequence of the one or more data sequences, based on an input window length (Tin) and an output window length (K), to get a set of unscaled subsequence pairs for the one or more data sequences, wherein the output window length (K) is equal to the prediction horizon, and each unscaled subsequence pair comprises an unscaled input subsequence and a corresponding unscaled output subsequence; applying a sequence specific scaling operation, on each data sequence to obtain a scaled data sequence, to form one or more scaled data sequences for the one or more data sequences, wherein each scaled data sequence of the one or more scaled data sequences, comprises one or more scaled data instances, wherein each scaled data instance of the one or more scaled data instances comprises a scaled endogenous value and one or more scaled exogenous values; forming one or more scaled subsequence pairs for each scaled data sequence, based on the input window length (Tin) and the output window length (K), to get a set of scaled subsequence pairs for the one or more scaled data sequences, wherein each scaled subsequence pair comprises a scaled input subsequence and a corresponding scaled output subsequence; and building a set of multi-step forecasting models for multiple time-series data forecasting, using the set of unscaled subsequence pairs for the one or more data sequences and the set of scaled subsequence pairs for the one or more scaled data sequences, wherein the set of multi-step forecasting models are built by: (A) building a multi-step forecasting model by training an encoder-decoder network with the set of scaled subsequence pairs for the one or more scaled data sequences, simultaneously, wherein an encoder of the encoder-decoder network takes the scaled input subsequence present in each scaled subsequence pair and a decoder of the encoder-decoder network takes the corresponding scaled output subsequence; (B) obtaining a predicted output data subsequence for each scaled input subsequence present in each scaled subsequence pair of the one or more scaled subsequence pairs for each scaled data sequence of the one or more scaled data sequences, using the built multi-step forecasting model, wherein a window length of each predicted output data subsequence is equal to the output window length (K); (C) applying an inverse sequence specific scaling operation, on each of the predicted output data subsequence to obtain an unscaled predicted output data subsequence, for each scaled subsequence pair of the one or more scaled subsequence pairs for each scaled data sequence of the one or more scaled data sequences; (D) calculating a mean error metric for each data sequence of the one or more data sequences, using (i) each unscaled predicted output data subsequence associated with the scaled data sequence, and (ii) the corresponding unscaled output subsequence associated with the corresponding data sequence; (E) assigning each data sequence of the one or more data sequences, to one of: (i) a successful data sequence set and (ii) an unsuccessful data sequence set, based on the associated mean error metric, wherein the successful data sequence set comprises the data sequences having the mean error metric less than or equal to a predefined threshold and the unsuccessful data sequence set comprises the data sequences having the mean error metric more than the predefined threshold; (F) adding the built multi-step forecasting model to the set of multi-step forecasting models, if the successful data sequence set comprises at least one data sequence, wherein the built multi-step forecasting model is classified as an optimum multi-step forecasting model for each data sequence present in the successful data sequence set; (G) repeating steps (A) through (F), by taking the set of scaled subsequence pairs of the scaled data sequences associated with the data sequences present in the unsuccessful data sequence set, in next iteration, until either: (i) the unsuccessful data sequence set becomes a null set, or (ii) the successful data sequence set becomes a null set; and (H) if the successful data sequence set is a null set but the unsuccessful data sequence set is not a e null set, then: classifying the built multi-step forecasting model obtained in prior iteration as a near-optimum multi-step forecasting model for each data sequence present in the unsuccessful data sequence set; calculating residual error output data subsequences for each data sequence present in the unsuccessful data sequence set, wherein each residual error output data subsequence is calculated for each unscaled subsequence pair for the corresponding data sequence, the residual error output data subsequence for each unscaled subsequence pair is calculated from (i) the corresponding unscaled predicted output data subsequence, and (ii) the corresponding unscaled output subsequence; and building a set of multi-step residual error forecasting models to forecast multi-step errors for the multi-step predictions forecasted by the associated near-optimum multi-step forecasting model, using the residual error output data subsequences for the data sequences present in the unsuccessful data sequence set.

In another aspect, there is provided a system for multiple time-series multi-step data forecasting, the system comprising: a memory storing instructions; one or more Input/Output (I/O) interfaces; and one or more hardware processors coupled to the memory via the one or more I/O interfaces, wherein the one or more hardware processors are configured by the instructions to: receive one or more data sequences and a prediction horizon, wherein each data sequence of the one or more data sequences comprises one or more data instances, each data instance of the one or more data instances comprises an endogenous value and one or more exogenous values; form one or more unscaled subsequence pairs for each data sequence of the one or more data sequences, based on an input window length (Tin) and a output window length (K), to form a set of unscaled subsequence pairs for the one or more data sequences, wherein the output window length (K) is equal to the prediction horizon, and each unscaled subsequence pair comprises an unscaled input subsequence and a corresponding unscaled output subsequence; apply a sequence specific scaling operation, on each data sequence to obtain a scaled data sequence, to form one or more scaled data sequences for the one or more data sequences, wherein each scaled data sequence of the one or more scaled data sequences, comprises one or more scaled data instances, each scaled data instance of the one or more scaled data instances comprises a scaled endogenous value and one or more scaled exogenous values; form one or more scaled subsequence pairs for each scaled data sequence, based on the input window length (Tin) and the output window length (K), to form a set of scaled subsequence pairs for the one or more scaled data sequences, wherein each scaled subsequence pair comprises a scaled input subsequence and a corresponding scaled output subsequence; and build a set of multi-step forecasting models, using the set of unscaled subsequence pairs for the one or more data sequences and the set of scaled subsequence pairs for the one or more scaled data sequences, wherein the set of multi-step forecasting models are built by: (A) building a multi-step forecasting model by training an encoder-decoder network with the set of scaled subsequence pairs for the one or more scaled data sequences, simultaneously, wherein an encoder of the encoder-decoder network takes the scaled input subsequence present in each scaled subsequence pair and a decoder of the encoder-decoder network takes the corresponding scaled output subsequence; (B) obtaining a predicted output data subsequence for each scaled input subsequence present in each scaled subsequence pair of the one or more scaled subsequence pairs for each scaled data sequence of the one or more scaled data sequences, using the built multi-step forecasting model, wherein a window length of each predicted output data subsequence is equal to the output window length (K); (C) applying an inverse sequence specific scaling operation, on each of the predicted output data subsequence to obtain an unscaled predicted output data subsequence, for each scaled subsequence pair of the one or more scaled subsequence pairs for each scaled data sequence of the one or more scaled data sequences; (D) calculating a mean error metric for each data sequence of the one or more data sequences, using (i) each unscaled predicted output data subsequence associated with the scaled data sequence, and (ii) the corresponding unscaled output subsequence associated with the corresponding data sequence; (E) assigning each data sequence of the one or more data sequences, to one of: (i) a successful data sequence set and (ii) an unsuccessful data sequence set, based on the associated mean error metric, wherein the successful data sequence set comprises the data sequences having the mean error metric less than or equal to a predefined threshold and the unsuccessful data sequence set comprises the data sequences having the mean error metric more than the predefined threshold; (F) adding the built multi-step forecasting model to the set of multi-step forecasting models, if the successful data sequence set comprises at least one data sequence, wherein the built multi-step forecasting model is classified as an optimum multi-step forecasting model for each data sequence present in the successful data sequence set; (G) repeating steps (A) through (F), by taking the set of scaled subsequence pairs of the scaled data sequences associated with the data sequences present in the unsuccessful data sequence set, in next iteration, until either: (i) the unsuccessful data sequence set becomes a null set, or (ii) the successful data sequence set becomes a null set; and (H) if the successful data sequence set is a null set but the unsuccessful data sequence set is not a null set, then: classifying the built multi-step forecasting model obtained in prior iteration as a near-optimum multi-step forecasting model for each data sequence present in the unsuccessful data sequence set; calculating residual error output data subsequences for each data sequence present in the unsuccessful data sequence set, wherein each residual error output data subsequence is calculated for each unscaled subsequence pair for the corresponding data sequence, the residual error output data subsequence for each unscaled subsequence pair is calculated from (i) the corresponding unscaled predicted output data subsequence, and (ii) the corresponding unscaled output subsequence; and building a set of multi-step residual error forecasting models to forecast multi-step errors for the multi-step predictions forecasted by the associated near-optimum multi-step forecasting model, using the residual error output data subsequences for the data sequences present in the unsuccessful data sequence set.

In yet another aspect, there is provided a computer program product comprising a non-transitory computer readable medium having a computer readable program embodied therein, wherein the computer readable program, when executed on a computing device, causes the computing device to: receive one or more data sequences and a prediction horizon, wherein each data sequence of the one or more data sequences comprises one or more data instances, each data instance of the one or more data instances comprises an endogenous value and one or more exogenous values; form one or more unscaled subsequence pairs for each data sequence of the one or more data sequences, based on an input window length (Tin) and a output window length (K), to form a set of unscaled subsequence pairs for the one or more data sequences, wherein the output window length (K) is equal to the prediction horizon, and each unscaled subsequence pair comprises an unscaled input subsequence and a corresponding unscaled output subsequence; apply a sequence specific scaling operation, on each data sequence to obtain a scaled data sequence, to form one or more scaled data sequences for the one or more data sequences, wherein each scaled data sequence of the one or more scaled data sequences, comprises one or more scaled data instances, each scaled data instance of the one or more scaled data instances comprises a scaled endogenous value and one or more scaled exogenous values; form one or more scaled subsequence pairs for each scaled data sequence, based on the input window length (Tin) and the output window length (K), to form a set of scaled subsequence pairs for the one or more scaled data sequences, wherein each scaled subsequence pair comprises a scaled input subsequence and a corresponding scaled output subsequence; and build a set of multi-step forecasting models, using the set of unscaled subsequence pairs for the one or more data sequences and the set of scaled subsequence pairs for the one or more scaled data sequences, wherein the set of multi-step forecasting models are built by: (A) building a multi-step forecasting model by training an encoder-decoder network with the set of scaled subsequence pairs for the one or more scaled data sequences, simultaneously, wherein an encoder of the encoder-decoder network takes the scaled input subsequence present in each scaled subsequence pair and a decoder of the encoder-decoder network takes the corresponding scaled output subsequence; (B) obtaining a predicted output data subsequence for each scaled input subsequence present in each scaled subsequence pair of the one or more scaled subsequence pairs for each scaled data sequence of the one or more scaled data sequences, using the built multi-step forecasting model, wherein a window length of each predicted output data subsequence is equal to the output window length (K); (C) applying an inverse sequence specific scaling operation, on each of the predicted output data subsequence to obtain an unscaled predicted output data subsequence, for each scaled subsequence pair of the one or more scaled subsequence pairs for each scaled data sequence of the one or more scaled data sequences; (D) calculating a mean error metric for each data sequence of the one or more data sequences, using (i) each unscaled predicted output data subsequence associated with the scaled data sequence, and (ii) the corresponding unscaled output subsequence associated with the corresponding data sequence; (E) assigning each data sequence of the one or more data sequences, to one of: (i) a successful data sequence set and (ii) an unsuccessful data sequence set, based on the associated mean error metric, wherein the successful data sequence set comprises the data sequences having the mean error metric less than or equal to a predefined threshold and the unsuccessful data sequence set comprises the data sequences having the mean error metric more than the predefined threshold; (F) adding the built multi-step forecasting model to the set of multi-step forecasting models, if the successful data sequence set comprises at least one data sequence, wherein the built multi-step forecasting model is classified as an optimum multi-step forecasting model for each data sequence present in the successful data sequence set; (G) repeating steps (A) through (F), by taking the set of scaled subsequence pairs of the scaled data sequences associated with the data sequences present in the unsuccessful data sequence set, in next iteration, until either: (i) the unsuccessful data sequence set becomes a null set, or (ii) the successful data sequence set becomes a null set; and (H) if the successful data sequence set is a null set but the unsuccessful data sequence set is not a null set, then: classifying the built multi-step forecasting model obtained in prior iteration as a near-optimum multi-step forecasting model for each data sequence present in the unsuccessful data sequence set; calculating residual error output data subsequences for each data sequence present in the unsuccessful data sequence set, wherein each residual error output data subsequence is calculated for each unscaled subsequence pair for the corresponding data sequence, the residual error output data subsequence for each unscaled subsequence pair is calculated from (i) the corresponding unscaled predicted output data subsequence, and (ii) the corresponding unscaled output subsequence; and building a set of multi-step residual error forecasting models to forecast multi-step errors for the multi-step predictions forecasted by the associated near-optimum multi-step forecasting model, using the residual error output data subsequences for the data sequences present in the unsuccessful data sequence set.

In an embodiment, building the set of multi-step residual error forecasting models to forecast multi-step errors for the multi-step predictions forecasted by the associated near-optimum multi-step forecasting model, using the residual error output data subsequences for the data sequences present in the unsuccessful data sequence set, further comprises: applying the sequence specific scaling operation, on residual error output data subsequences, to obtain scaled residual error output data subsequences for the data sequences present in the unsuccessful data sequence set; forming one or more scaled residual error subsequence pairs for each data sequence, from the associated scaled residual error output data subsequences, to form a set of scaled residual error subsequence pairs for the data sequences, wherein each scaled residual error subsequence pair comprises a scaled residual error input subsequence formed from first-step errors based on the input window length (Tin), and a corresponding scaled residual error output subsequence formed from multi-step errors based on the output window length (K); and building the set of multi-step residual error forecasting models to forecast multi-step errors for the multi-step predictions forecasted by the associated near-optimum multi-step forecasting model, using the set of scaled residual error subsequence pairs for the data sequences, wherein the set of multi-step residual error forecasting models are built by: (A) building a multi-step residual error forecasting model by training the encoder-decoder network with the set of scaled residual error subsequence pairs for the data sequences, simultaneously, wherein the encoder of the encoder-decoder network takes the scaled residual error input subsequence present in each scaled residual error subsequence pair and the decoder of the encoder-decoder network takes the corresponding scaled residual error output subsequence; (B) obtaining a predicted residual error output subsequence for each scaled residual error input subsequence present in each scaled residual error subsequence pair for each data sequence, using the built multi-step residual error forecasting model; (C) applying the inverse sequence specific scaling operation, on each of the predicted residual error output subsequence, to obtain an unscaled predicted residual error output subsequence, for each scaled residual error subsequence pair for each data sequence; (D) calculating the mean error metric for each data sequence, using (i) each unscaled predicted residual error output subsequence, (ii) the corresponding residual error output subsequence, and (iii) the corresponding unscaled predicted output data subsequence obtained from the associated near-optimum multi-step forecasting model, for each residual error subsequence pair present in the data sequence; (E) assigning each data sequence, to one of : (i) a successful residual error data sequence set and (ii) a unsuccessful residual error data sequence set, based on the associated mean error metric, wherein the successful residual error data sequence set comprises the data sequences having the mean error metric less than or equal to the predefined threshold and the unsuccessful residual error data sequence set comprises the data sequences having the mean error metric greater than the predefined threshold; (F) adding the built multi-step residual error forecasting model to the set of multi-step residual error forecasting models, if the successful residual error data sequence set comprises at least one data sequence, wherein the built multi-step residual error forecasting model is classified as an optimum multi-step residual error forecasting model for each data sequence present in the successful residual error data sequence set; (G) repeating steps (A) through (F), using the set of residual error subsequence pairs for the data sequences present in the unsuccessful residual error data sequence set, in next residual error iteration, until either: (i) the unsuccessful residual error data sequence set becomes a null set, or (ii) the successful residual error data sequence set becomes a null set; and (H) If the unsuccessful residual error data sequence set is not a null set, then using the near-optimum multi-step forecasting model for each data sequence present in the unsuccessful residual error data sequence set.

In an embodiment, the processor implemented method for multiple time-series multi-step data forecasting further comprising: receiving one or more testing exogenous output data subsequences and the associated testing input data sequences, wherein each associated testing input data sequence comprises one or more testing input data instances, each testing input data instance of the one or more testing input data instances comprises the testing endogenous value and one or more associated testing exogenous values, and each of the one or more testing exogenous output data subsequences comprises one or more testing exogenous values, the length of each associated testing input data sequence is equal to the input window length (Tin) and the length of each testing exogenous output data subsequence is equal to the prediction horizon or the output window length (K); and forecasting a testing endogenous output data subsequence for (i) each testing exogenous output data subsequence and (ii) the associated testing input data sequence, from one of: (i) the set of multi-step forecasting models, and (ii) the set of multi-step forecasting models and the set of multi-step residual error forecasting models, wherein each forecasted testing endogenous output data subsequence comprises one or more predicted endogenous values, the length of each forecasted testing endogenous output data subsequence is same as the length of the corresponding testing exogenous output data subsequence.

In an embodiment, the number of the one or more data instances present in each data sequence defines the length of the corresponding data sequence, and each data sequence of the one or more data sequences comprises a varied length or a fixed length or a mix of the varied length and the fixed length.

In an embodiment, the encoder-decoder network is a recurrent neural network, wherein the encoder of the encoder-decoder network comprises a plurality of gated recurrent unit (GRU) layers, each GRU layer comprises a plurality of GRUs, and the decoder of the encoder-decoder network comprises a gated recurrent unit (GRU) layer comprising a plurality of GRUs.

In an embodiment, each unscaled input subsequence comprises one or more unscaled input data instances, wherein each unscaled input data instance comprises an unscaled input endogenous value and a corresponding unscaled input exogenous value, and each unscaled output subsequence comprises one or more unscaled output data instances, wherein each unscaled output data instance comprises an unscaled output endogenous value and a corresponding unscaled output exogenous value; and each scaled input subsequence comprises one or more scaled input data instances, wherein each scaled input data instance comprises a scaled input endogenous value and a corresponding scaled input exogenous value, and each scaled output subsequence comprises one or more scaled output data instances, wherein each scaled output data instance comprises a scaled output endogenous value and a corresponding scaled output exogenous value.

In an embodiment, the endogenous value represents a dependent variable and varies on the one or more exogenous values which are independent variables.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for multiple time-series data forecasting, in accordance with some embodiments of the present disclosure.
FIG. 2A and FIG. 2B illustrate exemplary flow diagrams of a processor-implemented method for multiple time-series data forecasting, in accordance with some embodiments of the present disclosure.
FIG. 3 is an exemplary architecture of an encoder-decoder network for building a set of multi-step forecasting models for multiple time-series data forecasting, in accordance with some embodiments of the present disclosure.
FIG. 4 is an exemplary architecture of an encoder-decoder network for building a set of multi-step residual-error forecasting models for multiple time-series data forecasting, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure herein provides methods and systems that solves the technical problems of efficient time series forecasting across multiple data sequences. The present disclosure makes use of greedy recursive procedure to build a set of multi-step forecasting models that covers the multiple data sequences, using recurrent neural network (RNN) models.

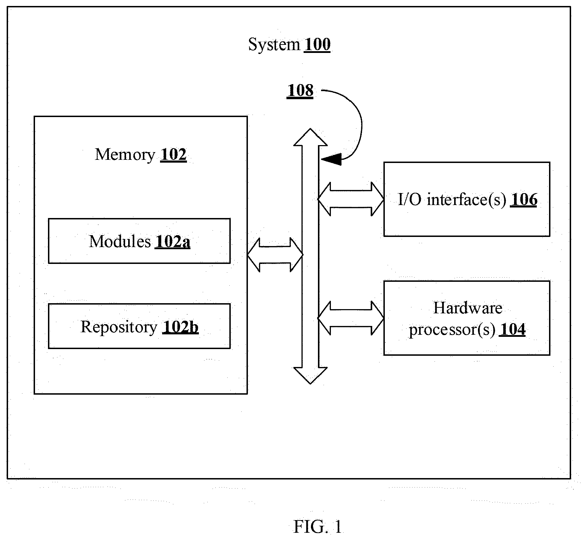

Referring now to the drawings, and more particularly to FIG. 1 through FIG. 4, where similar reference characters denote corresponding features consistently throughout the figures, there are shown preferred embodiments and these embodiments are described in the context of the following exemplary systems and/or methods.

FIG. 1 is an exemplary block diagram of a system 100 for multiple time-series data forecasting, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, **the expressions 'processors' and 'hardware processors' may be used interchangeably.** In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102a is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

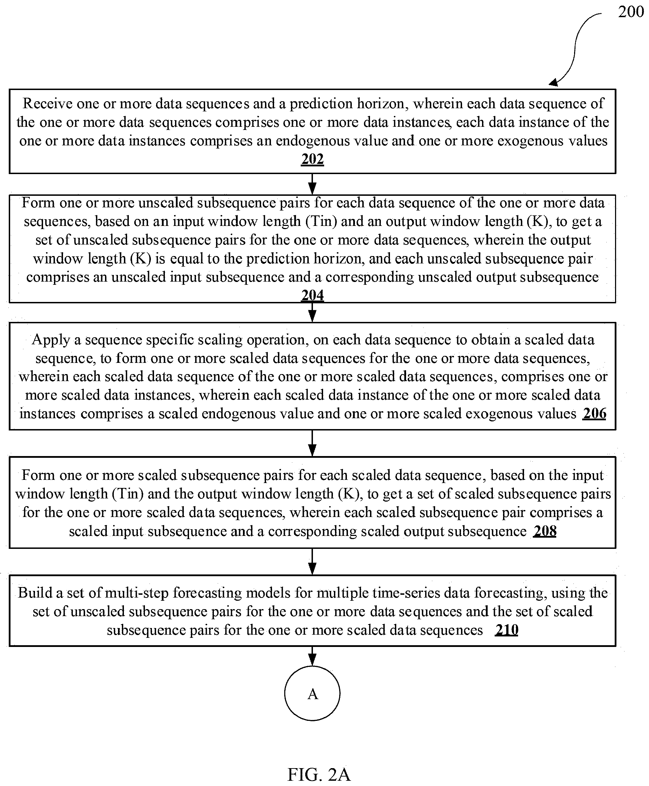

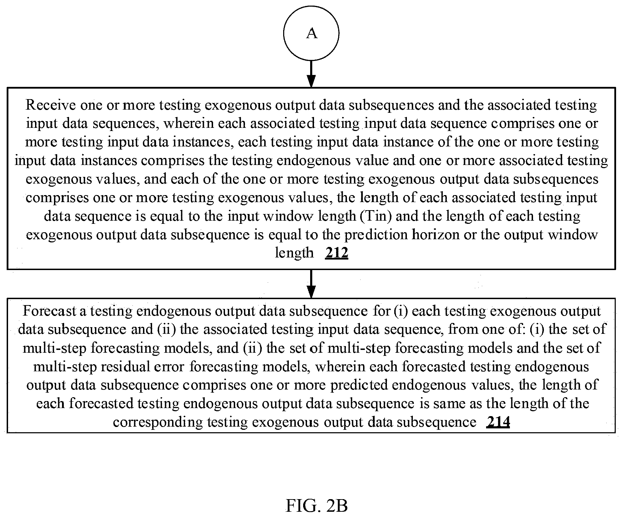

Referring to FIG. 2A and FIG. 2B, components and functionalities of the system 100 are described in accordance with an example embodiment of the present disclosure. For example, FIG. 2A and FIG. 2B illustrate exemplary flow diagrams of a processor-implemented method 200 for multiple time-series data forecasting, in accordance with some embodiments of the present disclosure. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive one or more data sequences for the time-series data forecasting and a prediction horizon. The prediction horizon defines a time period for which the time-series data to be forecasted. For example, the prediction horizon may be five days, i.e. the time-series data to be forecasted for next five days. Each data sequence of the one or more data sequences is a time-series data representing the historical data of an entity or a product, over the time, to be used for the time-series data forecasting based on the prediction horizon. For example, in the retail industry, each data sequence may be representation of the sales data of each product that is offered for sale by the retail industry. Hence the one more data sequences may represent the sales data of the one or more products offered by the retail industry. A number of the one or more data sequences may depends on the number of the products or the entities associated with the forecasting application. For example, if the retail industry is dealing with 100 products, then the number of the one or more data sequences may be 100. In an embodiment, the one or more data sequences may be stored in the repository 102b of the system 100.

Each data sequence of the one or more data sequences includes one or more data instances. The number of the one or more data instances present in each data sequence defines the length of the corresponding data sequence. In an embodiment, the length of each data sequence may be same or different to that of any other data sequence present in the one or more data sequences. Hence each data sequence may have a varied length or a fixed length, or some data sequences may have the varied length and some data sequence may have the fixed length. For example, in the retail industry, some products may be available for sale from the launch of the company itself. Some products may be available for sale over the time and some products may be available from recent times. Hence the historical sales data of the products may be available over the time but since their inception into the market.

Each data instance of the one or more data instances of each data sequence, includes an endogenous value and one or more exogenous values. The number of exogenous values in the data instance of each data sequence of the one or more data sequences, is constant. In an embodiment, the endogenous value may be a dependent variable and varies on the one or more exogenous values which may be independent variables. For example, in the retail industry, for the prediction of the sales for a certain product for the coming 5 days, based on associated product rates (the product rate may vary (change) each day), the sales of the product per day is the endogenous value and the associated product rate (s) is the exogenous value (s). The one or more exogenous values resembles different rates (may be with slight variation) of the product on different days for example.

To explain further steps of the method 200, the below example having 3 exemplary data sequences (D1, D2, D3) associated with 3 products (PI, P2, P3) is considered:
({100, 3}, {220, 5}, {356, 4}, {500, 2}, {340, 5}, {430, 6}, {550, 8}, {400, 7}, {350, 5}) →D1 for P1
({150, 5}, {240, 3}, {800, 4}, {360, 6}, {340, 8}, {900, 7}, {460, 5}) →D2 for P2 ({300, 6}, {420, 2}, {380, 8}, {540, 4}, {280, 6}, {730, 8}, {950, 3}) → D3 for P3

The length of D1 is 9 i.e., 9 data instances (historical data). Similarly, the length of D2 is 7 and the length of D3 is 7. The length of each data sequence is considered very less for the simplicity. The first value in each instance defines the endogenous value (for example, sales) and the second value (s) defines the exogenous value (s) (for example, product rate(s)). In more detail, in the instance {100, 3} of D1, **'100' is the endogenous value and '3' is the exogenous value. Also, the exemplar**y data sequences are considered with one exogenous value for the simplicity.

At step 204 of the method 200, the one or more hardware processors 104 of the system 100 are configured to form one or more unscaled subsequence pairs for each data sequence of the one or more data sequences, based on an input window length (Tin) and an output window length (K). Hence a set of unscaled subsequence pairs are formed from the one or more data sequences that are received at step 202 of the method 200. Each unscaled subsequence pair for each data sequence includes an unscaled input subsequence and a corresponding unscaled output subsequence. The input window length (Tin) defines the length of the unscaled input subsequence and the output window length (K) defines the length of the corresponding unscaled output subsequence. The output window length (K) is same as that of the prediction horizon received at step 202 of the method 200. In an embodiment, the input window length (Tin) may be more than or equal to the output window length (K).

Each unscaled input subsequence includes one or more unscaled input data instances, wherein each unscaled input data instance includes an unscaled input endogenous value and a corresponding unscaled input exogenous value. Similarly, each unscaled output subsequence includes one or more unscaled output data instances, wherein each unscaled output data instance includes an unscaled output endogenous value and a corresponding unscaled output exogenous value.

Table 1 shows the exemplary unscaled subsequence pairs for the data sequence D1 mentioned at step 202 of the method 200, with the input window length **(Tin) as '3' and the output window length (K) as '2'.**

**Table 1**

| **Unscaled subsequence pairs No.** | **Unscaled input subsequence** | **Corresponding unscaled output subsequence** |
|---|---|---|
| 1 | {100, 3}, {220, 5}, {356, 4} | {500, 2}, {340, 5} |
| 2 | {220, 5}, {356, 4}, {500, 2} | {340, 5}, {430, 6} |
| 3 | {356, 4}, {500, 2}, {340, 5} | {430, 6}, {550, 8} |
| 4 | {500, 2}, {340, 5}, {430, 6} | {550, 8}, {400, 7} |
| 5 | {340, 5}, {430, 6}, {550, 8} | {400, 7}, {350, 5} |

In table 1, there are 5 unscaled subsequence pairs for the exemplary data sequence D1. Hence the exemplary data sequence D1 includes 5 unscaled input subsequences and the 5 corresponding unscaled output subsequence. The unscaled input subsequences of 1^{st} unscaled subsequence pair (row 1) includes 3 unscaled input data instances ({100, 3}, {220, 5}, {356, 4}). In the unscaled input data instance {100, **3}, the unscaled input endogenous value is '100' and th**e corresponding unscaled input **exogenous value is '3'. Similarly, in the unscaled input data instance {356, 4}, the unscaled input endogenous value is '356' and the corresponding unscaled input exogenous value is '4'.**

Similarly, the unscaled output subsequences of 1^{st} unscaled subsequence pair (row 1) includes 2 unscaled output data instances ({500, 2}, {340, 5}). In the unscaled output data instance {500, 2}, the unscaled output endogenous **value is '500' and the corresponding unscaled output exogenous value is '2'. Similarly,** in the unscaled output data instance {340, 5}, the unscaled output endogenous value is **'340' and the corresponding unscaled output exogenous value is '5'.**

At step 206 of the method 200, the one or more hardware processors 104 of the system 100 are configured to apply a sequence specific scaling operation, on each data sequence received at step 202 of the method 200, to obtain a scaled data sequence. Hence one or more scaled data sequences from the one or more data sequences are formed after applying sequence specific scaling operation on each data sequence. The sequence specific scaling operation is applied individually on the endogenous values and the exogenous values present in each data sequence. In an embodiment, the sequence specific scaling operation may be a min-max normalization. The min-max normalization takes the minimum value and the maximum value in the dataset and converts the dataset in the scale of 0 to 1, wherein the minimum value will **be replaced with '0' and the maximum value will be replaced with '1'.** Each scaled data sequence of the one or more scaled data sequences, includes one or more scaled data instances, each scaled data instance of the one or more scaled data instances includes a scaled endogenous value and one or more scaled exogenous values. The sequence specific scaling operation is different for each data sequence as the maximum value and the minimum value may change in each data sequence.

For example in the data sequence D1: (100, 220, 356, 500, 340, 430, 550, 400, 350) is the endogenous values dataset and the (3, 5, 4, 2, 5, 6, 8, 7, 5) is the exogenous values dataset. In the endogenous values dataset, the maximum value is **'550' and which is scaled to '1' and the minimum value is '100' which is scaled to '0'.** Other values in the endogenous values dataset will be scaled accordingly. Similarly, in **the exogenous values dataset, the maximum value is '8' and which is scaled to '1' and the minimum value is '2' which is scaled to '0'. Other values in the exoge**nous values dataset will be scaled accordingly. The exemplary endogenous values dataset after applying the min-max normalization becomes (0, 0.26, 0.56, 0.88, 0.53, 0.73, 1, 0.66, 0.55) and the exemplary exogenous values dataset after applying the min-max normalization becomes (0.16, 0.5, 0.33, 0, 0.5, 0.66, 1, 0.83, 0.5). Hence the exemplary scaled data sequence (SD1) after applying the min-max normalization on the data sequence D1 becomes:
({0, 0.16}, {0.26, 0.5}, {0.56, 0.33}, {0.88, 0}, {0.53, 0.5}, {0.73, 0.66}, {1, 1}, {0.66, 0.83}, {0.55, 0.5}) **→**D1 for P1

Similarly, the other scaled data sequences are formed from the data sequences received at step 202 of the method 200.

At step 208 of the method 200, the one or more hardware processors 104 of the system 100 are configured to form one or more scaled subsequence pairs for each scaled data sequence obtained at step 206 of the method 200. The same input window length (Tin) and the same output window length (K) considered at step 204 of the method 200 for forming one or more scaled subsequence pairs for each scaled data sequence. Hence a set of scaled subsequence pairs are formed from the one or more scaled data sequences obtained at step 206 of the method 200.

Each scaled subsequence pair includes a scaled input subsequence and a corresponding scaled output subsequence. Each scaled input subsequence includes one or more scaled input data instances, wherein each scaled input data instance includes a scaled input endogenous value and a corresponding scaled input exogenous value. Similarly, each scaled output subsequence includes one or more scaled output data instances, wherein each scaled output data instance includes a scaled output endogenous value and a corresponding scaled output exogenous value.

Table 2 shows the exemplary scaled subsequence pairs for the scaled data sequence SD1 mentioned at step 206 of the method 200, with the input window **length (Tin) as '3' and the output window length (K) as '2'.**

**Table 2**

| **Scaled subsequence pairs No.** | **Scaled input subsequence** | **Corresponding scaled output subsequence** |
|---|---|---|
| 1 | ({0, 0.16}, {0.26, 0.5}, {0.56, 0.33} | {0.88, 0}, {0.53, 0.5} |
| 2 | {0.26, 0.5}, {0.56, 0.33}, {0.88, 0} | {0.53, 0.5}, {0.73, 0.66} |
| 3 | {0.56, 0.33}, {0.88, 0}, {0.53, 0.5} | {0.73, 0.66}, {1, 1} |
| 4 | {0.88, 0}, {0.53, 0.5}, {0.73, 0.66} | {1, 1}, {0.66, 0.83} |
| 5 | {0.53, 0.5}, {0.73, 0.66}, {1, 1} | {0.66, 0.83}, {0.55, 0.5} |

In table 2, there are 5 scaled subsequence pairs for the exemplary scaled data sequence SD1. Hence the exemplary scaled data sequence SD1 includes 5 scaled input subsequences and the 5 corresponding scaled output subsequence. The scaled input subsequences of 1^{st} scaled subsequence pair (row 1) includes 3 scaled input data instances ({0, 0.16}, {0.26, 0.5}, {0.56, 0.33}). In the scaled input data instance {0, **0.16}, the scaled input endogenous value is '0' and the corresponding scaled input exogenous value is '0.16'. Similarly, in the scaled input data instance {0.56, 0.33}, the scaled input endogenous value is '0.56' and the corr**esponding scaled input exogenous **value is '0.33'.**

Similarly, the scaled output subsequences of 1^{st} scaled subsequence pair (row 1) includes 2 scaled output data instances ({0.88, 0}, {0.53, 0.5}). In the scaled output data instance {0.88, 0}, the scaled ou**tput endogenous value is '0.88' and the corresponding scaled output exogenous value is '0'. Similarly, in the scaled output data instance {0.53, 0.5}, the scaled output endogenous value is '0.53' and the corresponding scaled output exogenous value is '0.5'.**

The scaled subsequence pairs present in table 2 are the scaled version of the unscaled subsequence pairs present in table 1 for each data sequence. More specifically, the scaled input subsequences mentioned in table 2 are the scaled version of the unscaled input subsequences mentioned in table 1. Similarly, the scaled output subsequences mentioned in table 2 are the scaled version of the unscaled output subsequences mentioned in table 1.

At step 210 of the method 200, the one or more hardware processors 104 of the system 100 are configured to build a set of multi-step forecasting models, using the set of unscaled subsequence pairs for the one or more data sequences formed at step 204 of the method 200 and the set of scaled subsequence pairs for the one or more scaled data sequences formed at step 208 of the method 200. Building the set of multi-step forecasting models is explained in detail through the following sub steps.

At step 210a of the method 200, the one or more hardware processors 104 of the system 100 are configured to build the multi-step forecasting model by training an encoder-decoder network with the set of scaled subsequence pairs for the one or more scaled data sequences, formed at step 208 of the method 200, simultaneously.

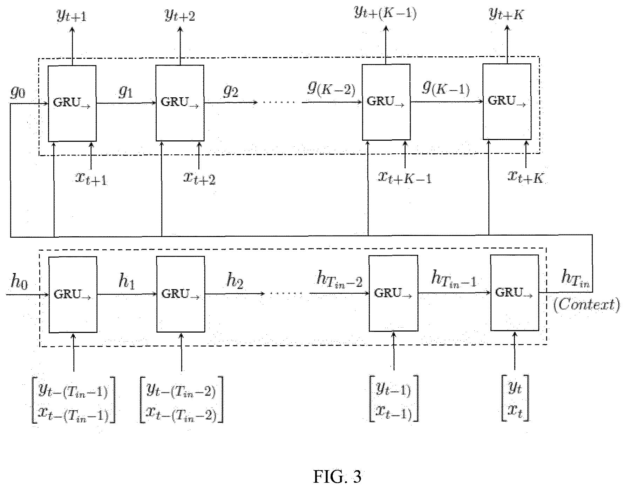

FIG. 3 is an exemplary architecture of the encoder-decoder network for building the set of multi-step forecasting models for multiple time-series data forecasting, in accordance with some embodiments of the present disclosure. In an embodiment, the encoder-decoder network is the recurrent neural network. The encoder of the encoder-decoder network includes a plurality of gated recurrent unit (GRU) layers. Each GRU layer includes a plurality of GRUs, and the decoder of the encoder-decoder network includes a single gated recurrent unit (GRU) layer comprising a plurality of GRUs.

During the training, the encoder of the encoder-decoder network takes the scaled input subsequence present in each scaled subsequence pair and the decoder of the encoder-decoder network takes the corresponding scaled output subsequence. As shown in FIG. 3, {*X*_{*t-*(*Tᵢₙ-*1})*_{'} X*_{*t-*(*Tᵢₙ-*2)}*,* ... .., *X*_{*t-*1}*, Xₜ*} represents the exogenous values present in each scaled input subsequence and {*Y*_{*t-*(*Tᵢₙ-*1})*, Y*_{*t*-(*Tᵢₙ-*2)}, ....., *Y*_{*t-*1}*, Yₜ* } represents the endogenous values present in each scaled input subsequence. { *h*₀*, h*₁ , *h*₂, ....., *h*_{*Tᵢₙ*-2}, *h*_{*Tᵢₙ*-1}, *h_{Tᵢₙ}* } represents hidden states of the corresponding exogenous value-exogenous value pair present in the scaled input subsequence. Hence the encoder of the encoder-decoder network generates a hidden state and passes the final hidden state or the context to the decoder of the encoder-decoder network.

The decoder of the encoder-decoder network learns to generate the endogenous values **{*Y*_{*t*+1}*_{'} Y*_{*t*+}*₂,..., Y*_{*t*+*K-*1}*, ...Y_{t+K}*}** present in the scaled output subsequence, based on the corresponding exogenous values { ***X*_{*t*+}*₁, X*_{*t*+}*₂,*** ...., ***X*_{*t*+*K-*1}*, ...X*_{*t*+*K*}}** present in the scaled output subsequence and based on the context received from the encoder. { ***g*₀, *g*₁ ,*g*₂,** ....., ***g*_{*K-*2}, *g_{K-1}*}** represents hidden states of the decoder, that are generated while processing the exogenous value in the output subsequence along with the final hidden state or the context of the encoder. The encoder-decoder network is trained with the set of scaled subsequence pairs for the one or more scaled data sequences, simultaneously to build the multi-step forecasting model.

At step 210b of the method 200, the one or more hardware processors 104 of the system 100 are configured to obtain a predicted output data subsequence for each scaled input subsequence present in each scaled subsequence pair of the one or more scaled subsequence pairs for each scaled data sequence of the one or more scaled data sequences, using the multi-step forecasting model built at step 210a of the method 200. Each predicted output data subsequence includes only the endogenous values predicted by the multi-step forecasting model. The window length of each predicted output data subsequence is equal to the output window length (K). The multi-step forecasting model built at step 210a takes the scaled input subsequence as an input and forecasts the predicted output data subsequence, based on the exogenous values present in the corresponding scaled output subsequence present in the scaled subsequence pair.

For example, the multi-step forecasting model built at step 210a of the method 200 takes the ({0, 0.16}, {0.26, 0.5}, {0.56, 0.33}) of the scaled subsequence pair 1 present in table 2, and forecasts the predicted output data subsequence having only the endogenous values (for example, sales of the product) based on the exogenous values (0, 0.5) (for example, product rate) present in the corresponding scaled output subsequence ({0.88, 0}, {0.53, 0.5}) of the scaled subsequence pair. Hence the predicted output data subsequence for each scaled input subsequence includes only the associated endogenous values (for example, sales of the product). The predicted output data subsequence for each scaled input subsequence is in scaled values as the multi-step forecasting model is trained on the scaled data. Like this, the predicted output data subsequence is obtained for each scaled input subsequence present in each scaled subsequence pair of the one or more scaled subsequence pairs formed at step 208 of the method 200, for each scaled data sequence of the one or more scaled data sequences. Table 3 shows the exemplary predicted output data subsequences for the scaled subsequence pair of the scaled data sequence SD1, present in table 2.

**Table 3**

| **Scaled subsequence pairs No.** | **Scaled input subsequence** | **Corresponding scaled output subsequence** | **Predicted output data subsequences** |
|---|---|---|---|
| 1 | ({0, 0.16}, {0.26, 0.5}, {0.56, 0.33} | {0.88, 0}, {0.53, 0.5} | **{0.41, 0.69**} |
| 2 | {0.26, 0.5}, {0.56, 0.33}, {0.88, 0} | {0.53, 0.5}, {0.73, 0.66} | **{0.68, 0.85}** |
| 3 | {0.56, 0.33}, {0.88, 0}, {0.53, 0.5} | {0.73, 0.66}, {1, 1} | {**0.83**, **0.93**} |
| 4 | {0.88, 0}, {0.53, 0.5}, {0.73, 0.66} | {1, 1}, {0.66, 0.83} | **{0.95**, **0.73}** |
| 5 | {0.53, 0.5}, {0.73, 0.66}, {1, 1} | {0.66, 0.83}, {0.55, 0.5} | {**0.71**, **0.51**} |

In table 3, the predicted endogenous values may differ from the actual endogenous values (present in the corresponding scaled output subsequence).

As the predicted endogenous values present in each predicted output data subsequence are in scaled version, these to be de-scaled to get the original form. At step 210c of the method 200, the one or more hardware processors 104 of the system 100 are configured to apply inverse sequence specific scaling operation, on each predicted output data subsequence to obtain a unscaled predicted output data subsequence, for each scaled subsequence pair of the one or more scaled subsequence pairs for each scaled data sequence of the one or more scaled data sequences. The inverse sequence specific scaling operation is inverse to the sequence specific scaling operation applied at step 206 of the method 200. If the sequence specific scaling operation applied at step 206 of the method 200 is a min-max normalization, then the inverse sequence specific scaling operation is inverse to the min-max normalization applied at step 206 of the method 200. Further the same maximum value and the minimum value used in the min-max normalization of the associated data sequence are considered while applying the inverse sequence specific scaling operation. The inverse sequence specific scaling operation is applied only on the endogenous values predicted by the built multi-step forecasting model.

**For example, the same maximum value '550' and the same minimum value '100' are considered while applying the min**-max normalization on the predicted endogenous values as the predicted output data subsequences are associated to the scaled subsequence pairs of the scaled data sequence SD1, which is further associated with the data sequence D1. Table 4 shows the exemplary unscaled predicted output data subsequences for the predicted output data subsequences present in the table 3.

**Table 4**

| **Scaled subsequence pairs No.** | **Predicted output data subsequences** | **Unscaled predicted output data subsequences** |
|---|---|---|
| 1 | {**0.41, 0.69**} | {504, 357} |
| 2 | {**0.68, 0.85**} | {351, 425} |
| 3 | {**0.83, 0.93**} | {416, 519} |
| 4 | {**0.95, 0.73**} | {525, 409} |
| 5 | {**0.71**, **0.51**} | {398, 345} |

At step 210d of the method 200, the one or more hardware processors 104 of the system 100 are configured to calculate a mean error metric for each data sequence of the one or more data sequences, using (i) each unscaled predicted output data subsequence associated with the scaled data sequence, and (ii) the corresponding unscaled output subsequence associated with the corresponding data sequence. For example, table 5 shows the corresponding unscaled output subsequences with only endogenous values, associated with the data sequence D1 and the unscaled predicted output data subsequences associated with the scaled data sequence SD1 which is further associated with the data sequence D1.

**Table 5**

| **Unscaled subsequence pairs No.** | **Unscaled input subsequence** | **Corresponding unscaled output subsequence with endogenous values** | **Unscaled predicted output data subsequences** |
|---|---|---|---|
| 1 | {100, 3}, {220, 5}, {356, 4} | {500, 340} | {504, 357} |
| 2 | {220, 5}, {356, 4}, {500, 2} | {340, 430} | {351, 425} |
| 3 | {356, 4}, {500, 2}, {340, 5} | {430, 550} | {416, 519} |
| 4 | {500, 2}, {340, 5}, {430, 6} | {550, 400} | {525, 409} |
| 5 | {340, 5}, {430, 6}, {550, 8} | {400, 350} | {398, 345} |

In an embodiment, a mean absolute percentage error is calculated as the mean error metric for each data sequence of the one or more data sequences based on the absolute difference between the endogenous values present in the unscaled output subsequence and the unscaled predicted output data sequences for all the unscaled subsequence pairs associated with the data sequence. For example, table 6 shows absolute difference of endogenous values (difference of actual to predicted) for the data provided in Table 5.

**Table 6**

| **Unscaled subsequence pairs No.** | **Corresponding unscaled output subsequence with endogenous values** | **Unscaled predicted output data subsequences** | **Absolute difference of endogenous values** |
|---|---|---|---|
| 1 | {500, 340} | {504, 357} | 500-504 = 4 |
| | | | 340-357 = 17 |
| 2 | {340, 430} | {351, 425} | 340-351 = 11 |
| | | | 430-425 = 5 |
| 3 | {430, 550} | {416, 519} | 430-416 = 14 |
| | | | 550-519 = 31 |
| 4 | {550, 400} | {525, 409} | 550-525 = 25 |
| | | | 400-409 = 9 |
| 5 | {400, 350} | {398, 345} | 400-398 = 2 |
| | | | 350-345 = 5 |

Based on the calculated absolute difference of endogenous values present in table 6, the mean absolute percentage error is calculated as the mean error metric for the data sequence D1. Similarly, the mean error metrics for all the data sequences (for example, D2 and D3) received at step 202 of the method 200 are calculated.

At step 210e of the method 200, the one or more hardware processors 104 of the system 100 are configured to assign each data sequence of the one or more data sequences received at step 202 of the method 200, to one of : (i) a successful data sequence set and (ii) an unsuccessful data sequence set, based on the associated mean error metric. The successful data sequence set includes the data sequences having the mean error metric less than or equal to a predefined threshold and the unsuccessful data sequence set includes the data sequences having the mean error metric more than the predefined threshold. For example, the predefined threshold may be 30%.

For example, if the mean error metric for the data sequence D1 is 25%, the mean error metric for the data sequence D2 is 11%, and the mean error metric for the data sequence D3 is 38%, then the successful data sequence set includes the data sequences D1 and D2, and the unsuccessful data sequence set includes the data sequence D3.

At step 210f of the method 200, the one or more hardware processors 104 of the system 100 are configured to add the built multi-step forecasting model to the set of multi-step forecasting models, if the successful data sequence set includes at least one data sequence. The built multi-step forecasting model obtained at step 210a of the method 200 is classified as an optimum multi-step forecasting model for each data sequence present in the successful data sequence set. In more detail, the built multi-step forecasting model obtained at step 210a of the method 200 can cover the data sequences present in the successful data sequence set and hence can be used effectively and accurately for the time-series data forecasting for the data sequences present in the successful data sequence set.

For example, if the successful data sequence set includes the data sequence D1 and the unsuccessful data sequence set includes the data sequences D2 and D3, then the built multi-step forecasting model obtained at step 210a of the method 200 is the optimum multi-step forecasting model for the data sequence D1. In other words, the built multi-step forecasting model obtained at step 210a of the method 200 is not suitable and not accurate for the data sequences D2 and D3. Similarly, if the successful data sequence set includes all the data sequences D1, D2, and D3, and the unsuccessful data sequence set does not includes any data sequence (null set), then the built multi-step forecasting model obtained at step 210a of the method 200 is sufficient to cover all the data sequences D1, D2 and D3 for the time-series data forecasting and the method 200 stops here.

Similarly, if the successful data sequence set does not include any data sequence (null set) and but the unsuccessful data sequence set includes the data sequences D1, D2 and D3, then the built multi-step forecasting model obtained at step 210a of the method 200 is not suitable and not accurate for all the data sequences D1, D2 and D3. In such cases, the built multi-step forecasting model is discarded and not included in the set of multi-step forecasting models.

At step 210g of the method 200, the one or more hardware processors 104 of the system 100 are configured to repeat the steps (210a) through (210f), by taking the set of scaled subsequence pairs of the scaled data sequences associated with the data sequences present in the unsuccessful data sequence set, in next iteration. The steps (210a) through (210f) are performed only for the data sequences present in the unsuccessful data sequence set, in each next iteration. The steps (210a) through (210f) are repeated until either: (i) the unsuccessful data sequence set becomes a null set, or (ii) the successful data sequence set becomes a null set.

For example, after the step 210g of the method 200, if the successful data sequence set does not include any data sequences (if the successful data sequence set is a null set),but the unsuccessful data sequence set includes at least one data sequence out of the data sequences D1, D2 and D3, then the built multi-step forecasting model obtained at step 210a of the method 200 is not suitable and not accurate for the data sequence (s) present in the unsuccessful data sequence set. In such cases, the built multi-step forecasting model is discarded and not included in the set of forecasting models.

At step 210h of the method 200, the one or more hardware processors 104 of the system 100 are configured to build a set of multi-step residual error forecasting models for the data sequences present in the unsuccessful data sequence set, if the successful data sequence set is a null set (no data sequences) but the unsuccessful data sequence set is not a null set. In this case, the built multi-step forecasting model obtained in prior iteration (where it has been classified as optimum multi-step forecasting model for at least one data sequence in the prior iteration) is classified as a near-optimum multi-step forecasting model for each data sequence present in the unsuccessful data sequence set. Next, the residual error output data subsequences are calculated for each data sequence present in the unsuccessful data sequence set. The residual error output data subsequences include only the endogenous values. Each residual error output data subsequence is calculated for each unscaled subsequence pair present in the corresponding data sequence. The residual error output data subsequence for each unscaled subsequence pair is calculated from (i) the unscaled predicted output data subsequence, and (ii) the corresponding unscaled output subsequence.

The difference of endogenous values shown in the table 6 are the residual errors and the residual error output data subsequence for each unscaled subsequence pair present in the corresponding data sequence, is obtained based on the associated residual errors. Table 7 shows the exemplary residual error output data subsequences for the unscaled subsequence pairs present in the data sequence D1.

**Table 7**

| **Unscaled subsequence pairs No.** | **Corresponding unscaled output subsequence with endogenous values** | **Unscaled predicted output data subsequences** | **Residual error output data subsequences** |
|---|---|---|---|
| 1 | {500, 340} | {504, 357} | {-4, -17} |
| 2 | {340, 430} | {351, 425} | {-11, 5} |
| 3 | {430, 550} | {416, 519} | {14, 31} |
| 4 | {550, 400} | {525, 409} | {25, -9} |
| 5 | {400, 350} | {398, 345} | {2, 5} |

The set of multi-step residual error forecasting models are built, using the residual error output data subsequences for the data sequences present in the unsuccessful data sequence set. In this process at step 210h1 of the method 200, the one or more hardware processors 104 of the system 100 are configured to apply the sequence specific scaling operation as mentioned at step 206 of the method 200, on residual error output data subsequences, to obtain scaled residual error output data subsequences for the data sequences present in the unsuccessful data sequence set.

Table 8 shows the exemplary scaled residual error output data subsequences for the residual error output data subsequences present in the table 7, for the data sequence D1. Here the minim**um value is considered as '-17' and the maximum value is considered as '31' in the min-**max normalization scaling operation.

**Table 8**

| **Unscaled subsequence pairs No.** | **Residual error output data subsequences** | **Scaled residual error output data subsequences** |
|---|---|---|
| 1 | {-4, -17} | {0.27, 0} |
| 2 | {-11, 5} | {0.12, 0.45} |
| 3 | {14, 31} | {0.64, 1} |
| 4 | {25, -9} | {0.87, 0.16} |
| 5 | {2, 5} | {0.39, 0.45} |

Then, at step 210h2 of the method 200, the one or more hardware processors 104 of the system 100 are configured, to form one or more scaled residual error subsequence pairs for each data sequence, from the associated scaled residual error output data subsequences, based on the input window length (Tin) and the output window length (K). Hence a set of scaled residual error subsequence pairs are formed for the data sequences. The scaled residual error subsequence pairs include only the endogenous values (for example, sales) and the corresponding exogenous values used during the building of multi-step forecasting model at step 210a of the method 200, are considered in this step.

Each scaled residual error subsequence pair includes a scaled residual error input subsequence and a corresponding scaled residual error output subsequence. Here the scaled residual error input subsequence is formed from first-step error residuals (first instance) in each of the scaled residual error output data subsequences, and the corresponding scaled residual error output subsequence is formed from the multi-step error residuals (based on the input window length (Tin) and the output window length (K)) in each of the residual error output data subsequences.

Table 9 shows the exemplary one or more scaled residual error subsequence pairs for the data sequence D1, formed based on the scaled residual error output data subsequences mentioned in able 8. In this example, the scaled residual error input subsequence and the scaled residual error output subsequence are formed based on the input window length (in this case, 3) and the output window length (in this case, 2), respectively.

**Table 9**

| **Scaled residual error subsequence pairs No.** | **Scaled residual error output data subsequences** | **Scaled residual error subsequence pairs** | |
|---|---|---|---|
| | | **Scaled residual error input subsequence** | **Scaled residual error output subsequence** |
| 1 | {0.27, 0} | ------ | ------ |
| 2 | {0.12, 0.45} | ------ | ------ |
| 3 | {0.64, 1} | ------ | ------ |
| 4 | {0.87, 0.16} | {0.27, 0.12, 0.64} | {0.87, 0.16} |
| 5 | {0.39, 0.45} | {0.12, 0.64, 0.87} | {0.39, 0.45} |

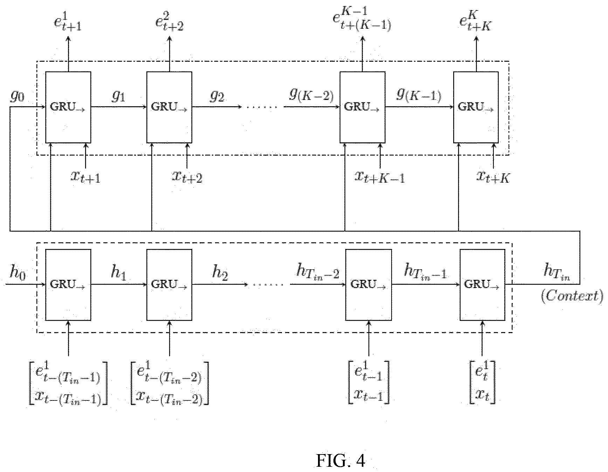

Then, at step 210h3 of the method 200, the one or more hardware processors 104 of the system 100 are configured to build the set of multi-step residual error forecasting models, using the set of scaled residual error subsequence pairs for the data sequences formed at step 210h2 of the method 200. At step 210h3a of the method 200, the one or more hardware processors 104 of the system 100 are configured to build a multi-step residual error forecasting model by training the encoder-decoder network with the set of scaled residual error subsequence pairs for the data sequences, simultaneously. FIG. 4 is an exemplary architecture of the encoder-decoder network for building the set of multi-step residual-error forecasting models for multiple time-series data forecasting, in accordance with some embodiments of the present disclosure. The architecture of the encoder-decoder network of FIG. 4 is same as that of the architecture of the encoder-decoder network of FIG. 3. However, the architecture of the encoder-decoder network of FIG. 4 takes the scaled residual error values of the endogenous values, but the corresponding scaled exogenous values used during the building of multi-step forecasting model at step 210a of the method 200, are considered in this step.

The encoder of the encoder-decoder network takes the scaled residual error input subsequence present in each scaled residual error subsequence pair and the corresponding scaled exogenous values, and the decoder of the encoder-decoder network takes the scaled residual error output subsequence and the corresponding scaled exogenous values. The corresponding exogenous values are taken from the associated data sequences received at step 202 of the method 200 and the corresponding scaled exogenous values are identified from the scaled subsequence pairs formed at step 208 of the method 200. Table 10 shows the exemplary scaled residual error input subsequence and the corresponding scaled residual error output subsequence containing the scaled residual error endogenous values and the corresponding scaled exogenous values.

**Table 10**

| **Scaled residual error subsequence pairs** | |
|---|---|
| **Scaled residual error input subsequence** | **Scaled residual error output subsequence** |
| {0.27, 0}, {0.12, 0.5}, {0.64, 0.66} | {0.87, 1} , {0.16, 0.83} |
| {0.12, 0.5}, {0.64, 0.66}, {0.87, 1} | {0.39, 0.83} , {0.45, 0.5} |

At step 210h3b of the method 200, the one or more hardware processors 104 of the system 100 are configured to obtain a predicted residual error output subsequence for each scaled residual error input subsequence present in each scaled residual error subsequence pair for each data sequence, using the built multi-step residual error forecasting model obtained at step 210h3a of the method 200.

At step 210h3c of the method 200, the one or more hardware processors 104 of the system 100 are configured to apply the inverse sequence specific scaling operation, on each of the predicted residual error output subsequence, to obtain an unscaled predicted residual error output subsequence, for each scaled residual error subsequence pair for each data sequence. The inverse sequence specific scaling operation is inverse to the sequence specific scaling operation applied at step 210h1 of the method 200.

At step 210h3d of the method 200, the one or more hardware processors 104 of the system 100 are configured to calculate a mean error metric for each data sequence, using (i) each unscaled predicted residual error output subsequence, (ii) the corresponding residual error output subsequence, and (iii) the corresponding unscaled predicted output data subsequence obtained from the associated near-optimum multi-step forecasting model, for each residual error subsequence pair present in the data sequence. In an embodiment, the mean error metric is calculated using the mean absolute percentage error, in the similar manner mentioned at step 210d of the method 200.

At step 210h3e of the method 200, the one or more hardware processors 104 of the system 100 are configured to assign each data sequence, to one of : (i) a successful residual error data sequence set and (ii) an unsuccessful residual error data sequence set, based on the associated mean error metric. The successful residual error data sequence set includes the data sequences having the mean error metric less than or equal to the predefined threshold. The unsuccessful residual error data sequence set includes the data sequences having the mean error metric more than the predefined threshold. In an embodiment, the predefined threshold is same as that of the predefined threshold mentioned at step 210e of the method 200, for example 30%.

At step 210h3f of the method 200, the one or more hardware processors 104 of the system 100 are configured to add the built multi-step residual error forecasting model to the set of multi-step residual error forecasting models, if the successful residual error data sequence set includes at least one data sequence. The built multi-step residual error forecasting model is classified as an optimum multi-step residual error forecasting model for each data sequence present in the successful residual error data sequence set.

At step 210h3g of the method 200, the one or more hardware processors 104 of the system 100 are configured to repeat the steps (210h3a) through (210h3f), using the set of scaled residual error subsequence pairs for the data sequences present in the unsuccessful residual error data sequence set, in next residual error iteration. The steps (210h3a) through (210h3f) are repeated until either: (i) the unsuccessful residual error data sequence set becomes a null set, or (ii) the successful residual error data sequence set becomes a null set.

At step 210h3h of the method 200, the one or more hardware processors 104 of the system 100 are configured to use the near-optimum multi-step forecasting model for each data sequence present in the unsuccessful residual error data sequence set, after the step 210h3g of the method 200.

Hence, each data sequence present in the successful data sequence set obtained at step 210e of the method 200 is mapped to respective optimum multi-step forecasting model and each data sequence present in the unsuccessful data sequence set obtained at step 210e of the method 200 is mapped to either of: (i) the near-optimum multi-step forecasting model classified at step 210h and the respective optimum multi-step residual error forecasting model classified at step 210h3f of the method 200, or (ii) only the near-optimum multi-step forecasting model classified at step 210h, for the data sequence present in the unsuccessful residual error data sequence set, while the successful residual error data sequence set is a null set.

At step 212 of the method 200, the one or more hardware processors 104 of the system 100 are further configured to receive one or more testing exogenous output data subsequences and the associated testing input data sequences, for the multiple time-series data forecasting using the set of multi-step forecasting models. Each associated testing input data sequence includes one or more testing input data instances, wherein each testing input data instance of the one or more testing input data instances includes the testing endogenous value and one or more associated testing exogenous values. Each of the one or more testing exogenous output data subsequences includes one or more testing exogenous values. The length of each associated testing input data sequence is equal to the input window length (Tin) and the length of each testing exogenous output data subsequence is equal to the prediction horizon or the output window length.

For example, if forecasting the time-series data for next 2 days (the time horizon or the output window length (K) is 2) for the data sequences D1, D2 and D3 mentioned at step 202 of the method 200, is needed, then the associated testing input data sequences (TD1, TD2, TD3) includes ({550, 8}, {400, 7}, {350,5}) from D1, ({340, 8}, {900, 7}, {460, 5}) from D2 and ({280, 6}, {730, 8}, {950, 3}) from D3.

The one or more testing exogenous output data subsequences includes only the exogenous values to be considered for the forecasting to forecast the associated endogenous values. For example, the testing exogenous output data subsequence for the input data s**equences TD1 may be ({?, 11}, {?, 7}), where '11' and '7' are the** exemplary exogenous values for next two days. Similarly, the testing exogenous output data subsequence for the input data sequences TD2 may be ({?, 5}, {?, 9}), }), where **'5' and '9' are the** exemplary exogenous values for next two days, and lastly, the testing exogenous output data subsequence for the input data sequences TD3 may be ({?, 20}, **{?, 8}), }), where '20' and '8' are the exemplary exogenous values for next two days. Here, '?' indic**ates the endogenous values which are to be forecasted using the set of multi-step forecasting models, based on the corresponding exogenous values.

Further, the one or more testing exogenous output data subsequences and the associated testing input data sequences are scaled using the sequence specific scaling operation to obtain the corresponding scaled sequences before feeding to the respective multi-step forecasting model (s). The same maximum value and the minimum value used at step 206 of the method 200, are considered while applying the sequence specific scaling operation.

At step 214 of the method 200, the one or more hardware processors 104 of the system 100 are further configured to forecast a testing endogenous output data subsequence for (i) each testing exogenous output data subsequence and (ii) the associated testing input data sequence, by using one of: (i) the corresponding multi-step forecasting model classified as optimum multi-step forecasting model obtained at step 210f of the method 200, (ii) the corresponding multi-step forecasting model classified as near-optimum multi-step forecasting model obtained at step 210h of the method 200, and (iii) the corresponding multi-step forecasting model classified as optimum multi-step forecasting model obtained at step 210f of the method 200, and the corresponding multi-step residual error forecasting model classified as optimum multi-step residual error forecasting model obtained at step 210h3f of the method 200.

Each forecasted testing endogenous output data subsequence includes one or more predicted endogenous values (for example sales). The length of each forecasted testing endogenous output data subsequence is same as the length of the corresponding testing exogenous output data subsequence. Each forecasted testing endogenous output data subsequence is de-scaled using the inverse sequence specific scaling operation to obtain the unscaled forecasted testing endogenous output data subsequences.

A relevant multi-step forecasting model set for each testing input data sequence received at step 212 of the method 200, is identified from the set of multi-step forecasting models obtained at step 210 of the method 200, and the set of multi-step residual error forecasting models obtained at step 210h3f of the method 200. The relevant multi-step forecasting model set for each testing input data sequence includes either of : (i) only the optimum multi-step forecasting model, or (ii) the multi-step near-optimum forecasting model, or (iii) the multi-step near-optimum forecasting model and the optimum multi-step residual error forecasting model.

If relevant multi-step forecasting model set for the testing input data sequence includes only the optimum multi-step forecasting model, then only the optimum multi-step forecasting model is used to forecast the endogenous values (testing endogenous output data subsequence), based on the exogenous values present in the testing exogenous output data subsequence. If relevant multi-step forecasting model set for the testing input data sequence includes only the near-optimum multi-step forecasting model, then only the near-optimum multi-step forecasting model is used to forecast the endogenous values (testing endogenous output data subsequence), based on the exogenous values present in the testing exogenous output data subsequence.

If relevant multi-step forecasting model set for the testing input data sequence includes both the near-optimum multi-step forecasting model and the optimum multi-step residual error forecasting model, then the near-optimum multi-step forecasting model is used to forecast the initial endogenous values (testing endogenous output data subsequence), based on the exogenous values present in the testing exogenous output data subsequence. Then, the optimum multi-step residual error forecasting model is used to forecast the residual error endogenous values. Lastly, the initial endogenous values are adjusted with the associated residual error endogenous values to obtain the final endogenous values (testing endogenous output data subsequence).

In accordance with the present disclosure, the methods and systems of the present disclosure build the set of multi-step forecasting models for the multiple time-series prediction. The set of the models covers all the time-series data (data sequences) and used for the forecasting the multiple time-series multi-step prediction (having the output window length greater than 1) at one go. Hence the methods and systems of the present disclosure is useful for building the set of multi-step forecasting models which are useful for various forecasting applications such as prediction of the sales for retail industries, prediction of power consumption for households, the prediction of traffic occupancy across roads, and so on. The one or more multi-step residual error forecasting models makes the forecasting resulting from the set of multi-step forecasting models, accurate and efficient.

Further the set of forecasting models are built for multiple time-series prediction, by training the encoder-decoder network with the subsequences. Hence the methods and systems of the present disclosure works well for building the set of forecasting models for short sequences as well (where short historical data is present).

The multi-step residual error forecasting models may be built even for the data sequences (present in the successful data sequence set mentioned at step 210 of the method 200) having the optimum multi-step forecasting model generated at step 210f of the method 200. Hence, the multi-step residual errors forecasted by such multi-step residual error forecasting models further enhances the accuracy of forecasting by the optimum multi-step forecasting models.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. **Also, the words "comprising," "having," "containing," and "including," and other** similar forms are intended to be equivalent in meaning and be open ended in that an item or items following any one of these words is not meant to be an exhaustive listing of such item or items, or meant to be limited to only the listed item or items. It must **also be noted that as used herein and in the appended claims, the singular forms "a," "an," and "the" include plu**ral references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent **with the embodiments described herein. The term "computer-readable medium"** should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200) for multiple time-series multi-step data forecasting, the method (200) comprising the steps of:
receiving, via one or more hardware processors, one or more data sequences and a prediction horizon, wherein each data sequence of the one or more data sequences comprises one or more data instances, each data instance of the one or more data instances comprises an endogenous value and one or more exogenous values (202);
forming, via the one or more hardware processors, one or more unscaled subsequence pairs for each data sequence of the one or more data sequences, based on an input window length (Tin) and an output window length (K), to get a set of unscaled subsequence pairs for the one or more data sequences, wherein the output window length (K) is equal to the prediction horizon, and each unscaled subsequence pair comprises an unscaled input subsequence and a corresponding unscaled output subsequence (204);
applying, via the one or more hardware processors, a sequence specific scaling operation, on each data sequence to obtain a scaled data sequence, to form one or more scaled data sequences for the one or more data sequences, wherein each scaled data sequence of the one or more scaled data sequences, comprises one or more scaled data instances, wherein each scaled data instance of the one or more scaled data instances comprises a scaled endogenous value and one or more scaled exogenous values (206);
forming, via the one or more hardware processors, one or more scaled subsequence pairs for each scaled data sequence, based on the input window length (Tin) and the output window length (K), to get a set of scaled subsequence pairs for the one or more scaled data sequences, wherein each scaled subsequence pair comprises a scaled input subsequence and a corresponding scaled output subsequence (208); and
building, via the one or more hardware processors, a set of multi-step forecasting models for multiple time-series data forecasting, using the set of unscaled subsequence pairs for the one or more data sequences and the set of scaled subsequence pairs for the one or more scaled data sequences (210), wherein the set of multi-step forecasting models are built by:
(A) building a multi-step forecasting model by training an encoder-decoder network with the set of scaled subsequence pairs for the one or more scaled data sequences, simultaneously, wherein an encoder of the encoder-decoder network takes the scaled input subsequence present in each scaled subsequence pair and a decoder of the encoder-decoder network takes the corresponding scaled output subsequence (210a);
(B) obtaining a predicted output data subsequence for each scaled input subsequence present in each scaled subsequence pair of the one or more scaled subsequence pairs for each scaled data sequence of the one or more scaled data sequences, using the built multi-step forecasting model, wherein a window length of each predicted output data subsequence is equal to the output window length (K) (210b);
(C) applying an inverse sequence specific scaling operation, on each of the predicted output data subsequence to obtain an unscaled predicted output data subsequence, for each scaled subsequence pair of the one or more scaled subsequence pairs for each scaled data sequence of the one or more scaled data sequences (210c);
(D) calculating a mean error metric for each data sequence of the one or more data sequences, using (i) each unscaled predicted output data subsequence associated with the scaled data sequence, and (ii) the corresponding unscaled output subsequence associated with the corresponding data sequence (210d);
(E) assigning each data sequence of the one or more data sequences, to one of: (i) a successful data sequence set and (ii) an unsuccessful data sequence set, based on the associated mean error metric, wherein the successful data sequence set comprises the data sequences having the mean error metric less than or equal to a predefined threshold and the unsuccessful data sequence set comprises the data sequences having the mean error metric more than the predefined threshold (210e);
(F) adding the built multi-step forecasting model to the set of multi-step forecasting models, if the successful data sequence set comprises at least one data sequence, wherein the built multi-step forecasting model is classified as an optimum multi-step forecasting model for each data sequence present in the successful data sequence set (210f);
(G) repeating steps (A) through (F), by taking the set of scaled subsequence pairs of the scaled data sequences associated with the data sequences present in the unsuccessful data sequence set, in next iteration, until either: (i) the unsuccessful data sequence set becomes a null set, or (ii) the successful data sequence set becomes a null set (210g); and
(H) if the successful data sequence set is a null set but the unsuccessful data sequence set is not a e null set, then:
classifying the built multi-step forecasting model obtained in prior iteration as a near-optimum multi-step forecasting model for each data sequence present in the unsuccessful data sequence set;
calculating residual error output data subsequences for each data sequence present in the unsuccessful data sequence set, wherein each residual error output data subsequence is calculated for each unscaled subsequence pair for the corresponding data sequence, the residual error output data subsequence for each unscaled subsequence pair is calculated from (i) the corresponding unscaled predicted output data subsequence, and (ii) the corresponding unscaled output subsequence; and
building a set of multi-step residual error forecasting models to forecast multi-step errors for the multi-step predictions forecasted by the associated near-optimum multi-step forecasting model, using the residual error output data subsequences for the data sequences present in the unsuccessful data sequence set (210h).

2. The method of claim 1, wherein building the set of multi-step residual error forecasting models to forecast multi-step errors for the multi-step predictions forecasted by the associated near-optimum multi-step forecasting model, using the residual error output data subsequences for the data sequences present in the unsuccessful data sequence set, further comprises:
applying the sequence specific scaling operation, on residual error output data subsequences, to obtain scaled residual error output data subsequences for the data sequences present in the unsuccessful data sequence set (210h1);
forming one or more scaled residual error subsequence pairs for each data sequence, from the associated scaled residual error output data subsequences, to form a set of scaled residual error subsequence pairs for the data sequences, wherein each scaled residual error subsequence pair comprises a scaled residual error input subsequence formed from first-step errors based on the input window length (Tin), and a corresponding scaled residual error output subsequence formed from multi-step errors based on the output window length (K)(210h2); and
building the set of multi-step residual error forecasting models to forecast multi-step errors for the multi-step predictions forecasted by the associated near-optimum multi-step forecasting model, using the set of scaled residual error subsequence pairs for the data sequences (210h3), wherein the set of multi-step residual error forecasting models are built by:
(A) building a multi-step residual error forecasting model by training the encoder-decoder network with the set of scaled residual error subsequence pairs for the data sequences, simultaneously, wherein the encoder of the encoder-decoder network takes the scaled residual error input subsequence present in each scaled residual error subsequence pair and the decoder of the encoder-decoder network takes the corresponding scaled residual error output subsequence (210h3a);
(B) obtaining a predicted residual error output subsequence for each scaled residual error input subsequence present in each scaled residual error subsequence pair for each data sequence, using the built multi-step residual error forecasting model (210h3b);
(C) applying the inverse sequence specific scaling operation, on each of the predicted residual error output subsequence, to obtain an unscaled predicted residual error output subsequence, for each scaled residual error subsequence pair for each data sequence (210h3c);
(D) calculating the mean error metric for each data sequence, using
(i) each unscaled predicted residual error output subsequence,
(ii) the corresponding residual error output subsequence, and
(iii) the corresponding unscaled predicted output data subsequence obtained from the associated near-optimum multi-step forecasting model, for each residual error subsequence pair present in the data sequence (210h3d);
(E) assigning each data sequence, to one of: (i) a successful residual error data sequence set and (ii) a unsuccessful residual error data sequence set, based on the associated mean error metric, wherein the successful residual error data sequence set comprises the data sequences having the mean error metric less than or equal to the predefined threshold and the unsuccessful residual error data sequence set comprises the data sequences having the mean error metric greater than the predefined threshold (210h3e);
(F) adding the built multi-step residual error forecasting model to the set of multi-step residual error forecasting models, if the successful residual error data sequence set comprises at least one data sequence, wherein the built multi-step residual error forecasting model is classified as an optimum multi-step residual error forecasting model for each data sequence present in the successful residual error data sequence set (210h3f);
(G) repeating steps (A) through (F), using the set of residual error subsequence pairs for the data sequences present in the unsuccessful residual error data sequence set, in next residual error iteration, until either: (i) the unsuccessful residual error data sequence set becomes a null set, or (ii) the successful residual error data sequence set becomes a null set (210h3g); and
(H) If the unsuccessful residual error data sequence set is not a null set, then using the near-optimum multi-step forecasting model for each data sequence present in the unsuccessful residual error data sequence set (210h3h).

3. The method of claim 1, further comprising:
receiving, via the one or more hardware processors, one or more testing exogenous output data subsequences and the associated testing input data sequences, wherein each associated testing input data sequence comprises one or more testing input data instances, each testing input data instance of the one or more testing input data instances comprises the testing endogenous value and one or more associated testing exogenous values, and each of the one or more testing exogenous output data subsequences comprises one or more testing exogenous values, the length of each associated testing input data sequence is equal to the input window length (Tin) and the length of each testing exogenous output data subsequence is equal to the prediction horizon or the output window length (K) (212); and
forecasting, via the one or more hardware processors, a testing endogenous output data subsequence for (i) each testing exogenous output data subsequence and (ii) the associated testing input data sequence, from one of: (i) the set of multi-step forecasting models, and (ii) the set of multi-step forecasting models and the set of multi-step residual error forecasting models, wherein each forecasted testing endogenous output data subsequence comprises one or more predicted endogenous values, the length of each forecasted testing endogenous output data subsequence is same as the length of the corresponding testing exogenous output data subsequence (214).

4. The method of claim 1, wherein a number of the one or more data instances present in each data sequence defines the length of the corresponding data sequence, and each data sequence of the one or more data sequences comprises a varied length or a fixed length or a mix of the varied length and the fixed length.

5. The method of claim 1, wherein the encoder-decoder network is a recurrent neural network, wherein the encoder of the encoder-decoder network comprises a plurality of gated recurrent unit (GRU) layers, each GRU layer comprises a plurality of GRUs, and the decoder of the encoder-decoder network comprises a gated recurrent unit (GRU) layer comprising a plurality of GRUs.

6. The method of claim 1, wherein:
each unscaled input subsequence comprises one or more unscaled input data instances, wherein each unscaled input data instance comprises an unscaled input endogenous value and a corresponding unscaled input exogenous value, and each unscaled output subsequence comprises one or more unscaled output data instances, wherein each unscaled output data instance comprises an unscaled output endogenous value and a corresponding unscaled output exogenous value; and
each scaled input subsequence comprises one or more scaled input data instances, wherein each scaled input data instance comprises a scaled input endogenous value and a corresponding scaled input exogenous value, and each scaled output subsequence comprises one or more scaled output data instances, wherein each scaled output data instance comprises a scaled output endogenous value and a corresponding scaled output exogenous value.

7. The method of claim 1, wherein the endogenous value represents a dependent variable and varies on the one or more exogenous values which are independent variables.

8. A system (100) for multiple time-series multi-step data forecasting, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
receive one or more data sequences and a prediction horizon, wherein each data sequence of the one or more data sequences comprises one or more data instances, each data instance of the one or more data instances comprises an endogenous value and one or more exogenous values;
form one or more unscaled subsequence pairs for each data sequence of the one or more data sequences, based on an input window length (Tin) and a output window length (K), to form a set of unscaled subsequence pairs for the one or more data sequences, wherein the output window length (K) is equal to the prediction horizon, and each unscaled subsequence pair comprises an unscaled input subsequence and a corresponding unscaled output subsequence;
apply a sequence specific scaling operation, on each data sequence to obtain a scaled data sequence, to form one or more scaled data sequences for the one or more data sequences, wherein each scaled data sequence of the one or more scaled data sequences, comprises one or more scaled data instances, each scaled data instance of the one or more scaled data instances comprises a scaled endogenous value and one or more scaled exogenous values;
form one or more scaled subsequence pairs for each scaled data sequence, based on the input window length (Tin) and the output window length (K), to form a set of scaled subsequence pairs for the one or more scaled data sequences, wherein each scaled subsequence pair comprises a scaled input subsequence and a corresponding scaled output subsequence; and
build a set of multi-step forecasting models, using the set of unscaled subsequence pairs for the one or more data sequences and the set of scaled subsequence pairs for the one or more scaled data sequences, wherein the set of multi-step forecasting models are built by:
(A) building a multi-step forecasting model by training an encoder-decoder network with the set of scaled subsequence pairs for the one or more scaled data sequences, simultaneously, wherein an encoder of the encoder-decoder network takes the scaled input subsequence present in each scaled subsequence pair and a decoder of the encoder-decoder network takes the corresponding scaled output subsequence;
(B) obtaining a predicted output data subsequence for each scaled input subsequence present in each scaled subsequence pair of the one or more scaled subsequence pairs for each scaled data sequence of the one or more scaled data sequences, using the built multi-step forecasting model, wherein a window length of each predicted output data subsequence is equal to the output window length (K);
(C) applying an inverse sequence specific scaling operation, on each of the predicted output data subsequence to obtain an unscaled predicted output data subsequence, for each scaled subsequence pair of the one or more scaled subsequence pairs for each scaled data sequence of the one or more scaled data sequences;
(D) calculating a mean error metric for each data sequence of the one or more data sequences, using (i) each unscaled predicted output data subsequence associated with the scaled data sequence, and (ii) the corresponding unscaled output subsequence associated with the corresponding data sequence;
(E) assigning each data sequence of the one or more data sequences, to one of: (i) a successful data sequence set and (ii) an unsuccessful data sequence set, based on the associated mean error metric, wherein the successful data sequence set comprises the data sequences having the mean error metric less than or equal to a predefined threshold and the unsuccessful data sequence set comprises the data sequences having the mean error metric more than the predefined threshold;
(F) adding the built multi-step forecasting model to the set of multi-step forecasting models, if the successful data sequence set comprises at least one data sequence, wherein the built multi-step forecasting model is classified as an optimum multi-step forecasting model for each data sequence present in the successful data sequence set;
(G) repeating steps (A) through (F), by taking the set of scaled subsequence pairs of the scaled data sequences associated with the data sequences present in the unsuccessful data sequence set, in next iteration, until either: (i) the unsuccessful data sequence set becomes a null set, or (ii) the successful data sequence set becomes a null set; and
(H) if the successful data sequence set is a null set but the unsuccessful data sequence set is not a null set, then:
classifying the built multi-step forecasting model obtained in prior iteration as a near-optimum multi-step forecasting model for each data sequence present in the unsuccessful data sequence set;
calculating residual error output data subsequences for each data sequence present in the unsuccessful data sequence set, wherein each residual error output data subsequence is calculated for each unscaled subsequence pair for the corresponding data sequence, the residual error output data subsequence for each unscaled subsequence pair is calculated from (i) the corresponding unscaled predicted output data subsequence, and (ii) the corresponding unscaled output subsequence; and
building a set of multi-step residual error forecasting models to forecast multi-step errors for the multi-step predictions forecasted by the associated near-optimum multi-step forecasting model, using the residual error output data subsequences for the data sequences present in the unsuccessful data sequence set.

9. The system of claim 8, wherein the one or more hardware processors (104) are further configured to build the set of multi-step residual error forecasting models to forecast multi-step errors for the multi-step predictions forecasted by the associated near-optimum multi-step forecasting model, using the residual error output data subsequences for the data sequences present in the unsuccessful data sequence set, by:
applying the sequence specific scaling operation, on residual error output data subsequences, to obtain scaled residual error output data subsequences for the data sequences present in the unsuccessful data sequence set;
forming one or more scaled residual error subsequence pairs for each data sequence, from the associated scaled residual error output data subsequences, to form a set of scaled residual error subsequence pairs for the data sequences, wherein each scaled residual error subsequence pair comprises a scaled residual error input subsequence formed from first-step errors based on the input window length (Tin), and a corresponding scaled residual error output subsequence formed from multi-step errors based on the output window length (K) ; and
building the set of multi-step residual error forecasting models to forecast multi-step errors for the multi-step predictions forecasted by the associated near-optimum multi-step forecasting model, using the set of scaled residual error subsequence pairs for the data sequences, wherein the set of multi-step residual error forecasting models are built by:
(A) building a multi-step residual error forecasting model by training the encoder-decoder network with the set of scaled residual error subsequence pairs for the data sequences, simultaneously, wherein the encoder of the encoder-decoder network takes the scaled residual error input subsequence present in each scaled residual error subsequence pair and the decoder of the encoder-decoder network takes the corresponding scaled residual error output subsequence;
(B) obtaining a predicted residual error output subsequence for each scaled residual error input subsequence present in each scaled residual error subsequence pair for each data sequence, using the built multi-step residual error forecasting model;
(C) applying the inverse sequence specific scaling operation, on each of the predicted residual error output subsequence, to obtain an unscaled predicted residual error output subsequence, for each scaled residual error subsequence pair for each data sequence;
(D) calculating a mean error metric for each data sequence, using (i) each unscaled predicted residual error output subsequence, (ii) the corresponding residual error output subsequence, and (iii) the corresponding unscaled predicted output data subsequence obtained from the associated near-optimum multi-step forecasting model, for each residual error subsequence pair present in the data sequence;
(E) assigning each data sequence, to one of: (i) a successful residual error data sequence set and (ii) a unsuccessful residual error data sequence set, based on the associated mean error metric, wherein the successful residual error data sequence set comprises the data sequences having the mean error metric less than or equal to the predefined threshold and the unsuccessful residual error data sequence set comprises the data sequences having the mean error metric greater than the predefined threshold;
(F) adding the built multi-step residual error forecasting model to the set of multi-step residual error forecasting models, if the successful residual error data sequence set comprises at least one data sequence, wherein the built multi-step residual error forecasting model is classified as an optimum multi-step residual error forecasting model for each data sequence present in the successful residual error data sequence set;
(G) repeating steps (A) through (F), using the set of residual error subsequence pairs for the data sequences present in the unsuccessful residual error data sequence set, in next residual error iteration, until either: (i) the unsuccessful residual error data sequence set becomes a null set, or (ii) the successful residual error data sequence set becomes a null set; and
(H) If the unsuccessful residual error data sequence set is not a null set, then using the near-optimum multi-step forecasting model for each data sequence present in the unsuccessful residual error data sequence set.

10. The system of claim 8, wherein the one or more hardware processors (104) are further configured to:
receive one or more testing exogenous output data subsequences and the associated testing input data sequences, wherein each associated testing input data sequence comprises one or more testing input data instances, each testing input data instance of the one or more testing input data instances comprises the testing endogenous value and one or more associated testing exogenous values, and each of the one or more testing exogenous output data subsequences comprises one or more testing exogenous values, the length of each associated testing input data sequence is equal to the input window length (Tin) and the length of each testing exogenous output data subsequence is equal to the prediction horizon or the output window length (K); and
forecast a testing endogenous output data subsequence for (i) each testing exogenous output data subsequence and (ii) the associated testing input data sequence, from one of: (i) the set of multi-step forecasting models, and (ii) the set of multi-step forecasting models and the set of multi-step residual error forecasting models, wherein each forecasted testing endogenous output data subsequence comprises one or more predicted endogenous values, the length of each forecasted testing endogenous output data subsequence is same as the length of the corresponding testing exogenous output data subsequence.

11. The system of claim 8, wherein a number of the one or more data instances present in each data sequence defines the length of the corresponding data sequence, and each data sequence of the one or more data sequences comprises a varied length or a fixed length or a mix of the varied length and the fixed length.

12. The system of claim 8, wherein the encoder-decoder network is a recurrent neural network, wherein the encoder of the encoder-decoder network comprises a plurality of gated recurrent unit (GRU) layers, each GRU layer comprises a plurality of GRUs, and the decoder of the encoder-decoder network comprises a gated recurrent unit (GRU) layer comprising a plurality of GRUs.

13. The system of claim 8, wherein:
each unscaled input subsequence comprises one or more unscaled input data instances, wherein each unscaled input data instance comprises an unscaled input endogenous value and a corresponding unscaled input exogenous value, and each unscaled output subsequence comprises one or more unscaled output data instances, wherein each unscaled output data instance comprises an unscaled output endogenous value and a corresponding unscaled output exogenous value; and
each scaled input subsequence comprises one or more scaled input data instances, wherein each scaled input data instance comprises a scaled input endogenous value and a corresponding scaled input exogenous value, and each scaled output subsequence comprises one or more scaled output data instances, wherein each scaled output data instance comprises a scaled output endogenous value and a corresponding scaled output exogenous value.

14. The system of claim 8, wherein the endogenous value represents a dependent variable and varies on the one or more exogenous values which are independent variables.

15. A computer program product comprising a non-transitory computer readable medium having a computer readable program embodied therein, wherein the computer readable program, when executed on a computing device, causes the computing device to:
receive one or more data sequences and a prediction horizon, wherein each data sequence of the one or more data sequences comprises one or more data instances, each data instance of the one or more data instances comprises an endogenous value and one or more exogenous values;
form one or more unscaled subsequence pairs for each data sequence of the one or more data sequences, based on an input window length (Tin) and a output window length (K), to form a set of unscaled subsequence pairs for the one or more data sequences, wherein the output window length (K) is equal to the prediction horizon, and each unscaled subsequence pair comprises an unscaled input subsequence and a corresponding unscaled output subsequence;
apply a sequence specific scaling operation, on each data sequence to obtain a scaled data sequence, to form one or more scaled data sequences for the one or more data sequences, wherein each scaled data sequence of the one or more scaled data sequences, comprises one or more scaled data instances, each scaled data instance of the one or more scaled data instances comprises a scaled endogenous value and one or more scaled exogenous values;
form one or more scaled subsequence pairs for each scaled data sequence, based on the input window length (Tin) and the output window length (K), to form a set of scaled subsequence pairs for the one or more scaled data sequences, wherein each scaled subsequence pair comprises a scaled input subsequence and a corresponding scaled output subsequence;
build a set of multi-step forecasting models, using the set of unscaled subsequence pairs for the one or more data sequences and the set of scaled subsequence pairs for the one or more scaled data sequences, wherein the set of multi-step forecasting models are built by:
(A) building a multi-step forecasting model by training an encoder-decoder network with the set of scaled subsequence pairs for the one or more scaled data sequences, simultaneously, wherein an encoder of the encoder-decoder network takes the scaled input subsequence present in each scaled subsequence pair and a decoder of the encoder-decoder network takes the corresponding scaled output subsequence;
(B) obtaining a predicted output data subsequence for each scaled input subsequence present in each scaled subsequence pair of the one or more scaled subsequence pairs for each scaled data sequence of the one or more scaled data sequences, using the built multi-step forecasting model, wherein a window length of each predicted output data subsequence is equal to the output window length (K);
(C) applying an inverse sequence specific scaling operation, on each of the predicted output data subsequence to obtain an unscaled predicted output data subsequence, for each scaled subsequence pair of the one or more scaled subsequence pairs for each scaled data sequence of the one or more scaled data sequences;
(D) calculating a mean error metric for each data sequence of the one or more data sequences, using (i) each unscaled predicted output data subsequence associated with the scaled data sequence, and (ii) the corresponding unscaled output subsequence associated with the corresponding data sequence;
(E) assigning each data sequence of the one or more data sequences, to one of: (i) a successful data sequence set and (ii) an unsuccessful data sequence set, based on the associated mean error metric, wherein the successful data sequence set comprises the data sequences having the mean error metric less than or equal to a predefined threshold and the unsuccessful data sequence set comprises the data sequences having the mean error metric more than the predefined threshold;
(F) adding the built multi-step forecasting model to the set of multi-step forecasting models, if the successful data sequence set comprises at least one data sequence, wherein the built multi-step forecasting model is classified as an optimum multi-step forecasting model for each data sequence present in the successful data sequence set;
(G) repeating steps (A) through (F), by taking the set of scaled subsequence pairs of the scaled data sequences associated with the data sequences present in the unsuccessful data sequence set, in next iteration, until either: (i) the unsuccessful data sequence set becomes a null set, or (ii) the successful data sequence set becomes a null set; and
(H)if the successful data sequence set is a null set but the unsuccessful data sequence set is not a null set, then:
classifying the built multi-step forecasting model obtained in prior iteration as a near-optimum multi-step forecasting model for each data sequence present in the unsuccessful data sequence set;
calculating residual error output data subsequences for each data sequence present in the unsuccessful data sequence set, wherein each residual error output data subsequence is calculated for each unscaled subsequence pair for the corresponding data sequence, the residual error output data subsequence for each unscaled subsequence pair is calculated from (i) the corresponding unscaled predicted output data subsequence, and (ii) the corresponding unscaled output subsequence; and
building a set of multi-step residual error forecasting models to forecast multi-step errors for the multi-step predictions forecasted by the associated near-optimum multi-step forecasting model, using the residual error output data subsequences for the data sequences present in the unsuccessful data sequence set;
receive one or more testing exogenous output data subsequences and the associated testing input data sequences, wherein each associated testing input data sequence comprises one or more testing input data instances, each testing input data instance of the one or more testing input data instances comprises the testing endogenous value and one or more associated testing exogenous values, and each of the one or more testing exogenous output data subsequences comprises one or more testing exogenous values, the length of each associated testing input data sequence is equal to the input window length (Tin) and the length of each testing exogenous output data subsequence is equal to the prediction horizon or the output window length (K); and
forecast a testing endogenous output data subsequence for (i) each testing exogenous output data subsequence and (ii) the associated testing input data sequence, from one of: (i) the set of multi-step forecasting models, and (ii) the set of multi-step forecasting models and the set of multi-step residual error forecasting models, wherein each forecasted testing endogenous output data subsequence comprises one or more predicted endogenous values, the length of each forecasted testing endogenous output data subsequence is same as the length of the corresponding testing exogenous output data subsequence.
